# EUROPÄISCHE PATENTSCHRIFT

(11) **EP 3 043 153 B1**
(45) Veröffentlichungstag und Bekanntmachung des Hinweises auf die Patenterteilung: **01.01.2020**
(21) Anmeldenummer: 15195778.4
(22) Anmeldetag: 23.11.2015
(51) Int. Cl.: G01F 1/58, G01F 15/14

(54) **DURCHFLUSSMESSGERÄT**
FLOW MEASURING DEVICE
DÉBITMÈTRE

(30) Priorität: 05.01.2015 DE 102015000044; 01.10.2015 DE 102015116672
(43) Veröffentlichungstag der Anmeldung: 13.07.2016
(73) Patentinhaber: Krohne AG, 4019 Basel (CH)
(72) Erfinder: Freek, Beerling, 4826 HK Breda (NL); Heijnsdijk, Alexander Marnix, 3356 BW Papendrecht (NL); Neven, Josef, 26540 Mours St. Eusebe (FR); Nicolas, Christian, 26300 Chatuzange le Goubet (FR)
(74) Vertreter: Gesthuysen Patent- und Rechtsanwälte

(56) Entgegenhaltungen:
- EP-A1- 1 421 349
- JP-U- S59 151 114

## Beschreibung

Die Erfindung betrifft ein Durchflussmessgerät zur Durchflussmessung eines strömenden Mediums mit einer Messleitung und mit einem Messgerätgehäuse. Dabei nimmt das Messgerätgehäuse zumindest die Messleitung auf.

Bekannte Varianten von Durchflussmessgeräten sind beispielsweise magnetisch-induktive, Vortex- oder Coriolis-Durchflussmessgeräte.

Die folgenden Ausführungen beziehen sich auf das Beispiel der magnetisch-induktiven Durchflussmessgeräte. Die Erläuterungen zum Aufbau gelten jedoch allgemein auch für Durchflussmessgeräte, die andere Messprinzipien umsetzen.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. K.W. Bonfig, 3. Auflage, Vulkan-Verlag Essen, 2002, Seiten 123 bis 167, und auch auf die Literaturstelle "Grundlagen Magnetisch-Induktiver Durchflussmessung" von Dipl.-Ing. Friedrich Hoffmann, 3. Auflage, 2003, Firmendruckschrift der Firma KROHNE Messtechnik GmbH & Co. KG, verwiesen.

Magnetisch-induktive Durchflussmessgeräte verfügen je nach Ausgestaltung über eine Magnetfelderzeugungseinrichtung zur Erzeugung eines die Messleitung wenigstens teilweise durchsetzenden Magnetfeldes, mindestens eine Messelektrode zum Abgreifen einer in dem strömenden Medium induzierten Messspannung und eine Auswerteeinheit. In einigen Ausgestaltungen sind insbesondere zwei Messelektroden vorhanden.

Das Prinzip eines magnetisch-induktiven Durchflussmessgeräts zur Durchflussmessung eines strömenden Mediums geht auf Michael Faraday zurück, der im Jahre 1832 vorgeschlagen hat, das Prinzip der elektromagnetischen Induktion zur Messung der Strömungsgeschwindigkeit eines elektrisch leitfähigen Mediums anzuwenden.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die meistens mindestens eine Magnetfeldspule aufweist, meistens ein während des Messvorgangs sich zeitlich veränderndes Magnetfeld erzeugt wird und das Magnetfeld wenigstens teilweise das durch die Messleitung strömende elektrisch leitfähige Medium durchsetzt. Dabei weist das erzeugte Magnetfeld wenigstens eine Komponente senkrecht zur Längsachse der Messleitung bzw. senkrecht zur Strömungsrichtung des Mediums auf.

Wenn es einleitend heißt, dass zu dem magnetisch-induktiven Durchflussmessgerät mindestens eine Magnetfelderzeugungseinrichtung "zur Erzeugung eines zumindest auch senkrecht zur Längsachse der Messleitung verlaufenden Magnetfeldes" gehört, dann sei hier noch einmal darauf hingewiesen, dass das Magnetfeld zwar vorzugsweise senkrecht zur Längsachse der Messleitung bzw. senkrecht zur Strömungsrichtung des Mediums verläuft, ausreichend jedoch ist, dass eine Komponente des Magnetfeldes senkrecht zur Längsachse der Messleitung bzw. senkrecht zur Strömungsrichtung des Mediums verläuft.

Einleitend heißt es auch, dass die Magnetfelderzeugungseinrichtung zur Erzeugung eines vorzugsweise wechselnden Magnetfeldes bestimmt ist. Dadurch wird zum Ausdruck gebracht, dass es für die Lehre der Erfindung - nach ihrem Ausgangspunkt, nach den zugrundeliegenden Aufgaben und nach den Lösungen dieser Aufgaben - nicht darauf ankommt, dass es sich um ein wechselndes Magnetfeld handelt, wenn auch überwiegend magnetisch-induktive Durchflussmessgeräte Magnetfelderzeugungseinrichtungen haben, die ein wechselndes Magnetfeld erzeugen.

Eingangs ist auch ausgeführt, dass zu dem in Rede stehenden magnetisch-induktiven Durchflussmessgerät mindestens zwei die in dem elektrisch leitenden Medium induzierte Messspannung abgreifende Messelektroden gehören, die vorzugsweise das Medium berühren. Vorzugsweise verläuft die virtuelle Verbindungslinie der beiden Messelektroden zumindest im Wesentlichen senkrecht zur Richtung des die Messleitung senkrecht zur Längsachse der Messleitung durchsetzenden Magnetfeldes. Insbesondere können die Messelektroden so vorgesehen sein, dass deren virtuelle Verbindungslinie tatsächlich - mehr oder weniger - senkrecht zur Längsachse der Messleitung durchsetzenden Magnetfeldes verläuft.

Schließlich ist bereits ausgeführt, dass es sich bei den Messelektroden insbesondere um solche handeln kann, die das Medium berühren. Tatsächlich kann selbstverständlich die durch Induktion im strömenden, elektrisch leitfähigen Medium erzeugte elektrische Feldstärke durch direkt, also galvanisch mit dem Medium in Kontakt stehende Messelektroden als Messspannung abgegriffen werden. Es gibt aber auch magnetisch-induktive Durchflussmessgeräte, bei denen die Messspannung nicht durch direkt, also nicht durch galvanisch mit dem Medium in Kontakt stehende Messelektroden abgegriffen wird, vielmehr die Messspannung kapazitiv erfasst wird.

Bei einer funktionalen Betrachtung von magnetisch-induktiven Durchflussmessgeräten der in Rede stehenden Art kann man zwei Funktionseinheiten unterscheiden, nämlich eine erste Funktionseinheit mit der Messleitung und den Messelektroden und eine zweite Funktionseinheit mit der Magnetfelderzeugungseinrichtung, wobei zu der zweiten Funktionseinheit auch eine Auswerteeinheit gehören kann.

Denkbar sind zwei unterschiedliche Ausführungsformen von magnetisch-induktiven Durchflussmessgeräten, nämlich eine erste Ausführungsform, bei der die beiden zuvor angesprochenen Funktionseinheiten, also die Messleitung mit den Messelektroden und die Magnetfelderzeugungseinrichtung werksseitig bereits miteinander in Funktion gebracht sind, also werksseitig miteinander in Funktion gebrachte Bauteile eines bereits werksseitig funktionsfähigen magnetisch-induktiven Durchflussmessgerätes sind, und eine zweite Ausführungsform, bei der die beiden Funktionseinheiten getrennte Bauteile sind, die erst miteinander in Funktion gebracht ein funktionsfähiges magnetisch-induktives Durchflussmessgerät ergeben.

Nachfolgend wird immer die erste Ausführungsform eines magnetisch-induktiven Durchflussmessgeräts beschrieben, also die Ausführungsform, bei der die Messleitung mit den Messelektroden und die Magnetfelderzeugungseinrichtung bereits werksseitig miteinander in Funktion gebracht sind, also werksseitig miteinander in Funktion gebrachte Bauteile eines bereits funktionsfähigen magnetisch-induktiven Durchflussmessgerätes sind.

Zu den im Stand der Technik bekannten magnetisch-induktiven Durchflussmessgeräten wird beispielhaft verwiesen auf die EP 1 421 349 A1, die JP S59 151114 U, die DE 692 32 633 C2, die DE 199 07 864 A1, die DE 100 64 738 B4, die DE 102 43 748 A1, die DE 10 2008 005 258 A1 und DE 10 2011 112 703 A1 sowie auch auf die EP 0 704 682 A1 und die EP 0 834 057 A1.

Die bekannten magnetisch-induktiven Durchflussmessgeräte sind häufig dadurch insgesamt "stabile Konstruktionen", dass die Messleitung oder / und das Messgerätgehäuse aus Metall bestehen. Bei den Messleitungen handelt es sich in aller Regel um Messrohre, also um zylindrische Hohlkörper mit einem kreisringförmigen Querschnitt. Auch die Messgerätgehäuse sind häufig als zylindrische Hohlkörper mit einem kreisringförmigen Querschnitt oder einem im Wesentlichen kreisringförmigen Querschnitt ausgeführt. Weiter gilt für die meisten bekannten magnetisch-induktiven Durchflussmessgeräte, dass die Messgerätgehäuse beidseitig aus Metall bestehende Abschluss- und Anschlussflansche aufweisen. Einerseits schließen diese Abschluss- und Anschlussflansche, mit denen die beiden Enden der Messleitung - direkt oder indirekt - verbunden sind, das Durchflussmessgerät ab, darum der Ausdruck "Abschlussflansch". Andererseits dienen die Abschluss- und Anschlussflansche dem beiderseitigen Anschluss des Durchflussmessgeräts an entsprechende Rohrleitungsflansche, darum der Ausdruck "Anschlussflansch".

Die bekannten magnetisch-induktiven Durchflussmessgeräte sind in der Regel für den "industriellen Einsatz" konzipiert. Sie müssen deshalb einerseits insgesamt "stabile Konstruktionen" darstellen und andererseits erheblichen Anforderungen an die Messgenauigkeit genügen.

Auch bei der Entwicklung und der Herstellung magnetisch-induktiver Durchflussmessgeräte müssen selbstverständlich wirtschaftliche Gesichtspunkte beachtet werden und werden diese Gesichtspunkte auch beachtet. Gleichwohl sind die Herstellungskosten nicht der primäre Fokus bei den zum Stand der Technik gehörenden magnetisch-induktiven Durchflussmessgeräten.

Die obigen Ausführungen sollen dabei nicht auf das Messprinzip beschränkt sein, sondern gelten in weiten Teilen auch für andere Durchflussmessgeräte.

Es ist deshalb die der Erfindung zugrundeliegende Aufgabe, ein Durchflussmessgerät zur Verfügung zu stellen, das auch in Bereichen eingesetzt werden kann, in denen Durchflussmessgeräte - vor allem aus Kostengründen - bisher nicht oder nur in geringem Umfang eingesetzt worden sind. Es wird somit insbesondere ein kostengünstiges Durchflussmessgerät angestrebt.

Das erfindungsgemäße Durchflussmessgerät, bei dem die zuvor hergeleitete und aufgezeigte Aufgabe gelöst ist, ist zunächst und im Wesentlichen dadurch gekennzeichnet, dass der Messleitung und/oder dem Messgerätgehäuse eine Verstärkungsstruktur zugeordnet ist und dass die Verstärkungsstruktur aus mindestens einer Verstärkungseinheit - vorzugsweise mehreren Verstärkungseinheiten - besteht.

In einer Ausgestaltung handelt es sich bei dem Durchflussmessgerät um ein magnetisch-induktives Durchflussmessgerät. Dabei sind eine Magnetfelderzeugungseinrichtung zur Erzeugung eines die Messleitung wenigstens teilweise durchsetzenden Magnetfeldes, mindestens eine Messelektrode zum Abgreifen einer in dem strömenden Medium induzierten Messspannung und eine Auswerteeinheit vorhanden. In einer weiteren Ausgestaltung sind zwei Messelektroden vorhanden. In einer Ausgestaltung nimmt das Messgerätgehäuse zusätzlich zur Messleitung vorzugsweise auch die Magnetfelderzeugungseinrichtung und/oder die Messelektrode bzw. die Messelektroden und/oder die Auswerteeinheit auf.

Die folgenden Ausgestaltungen gelten jedoch nicht nur für magnetisch-induktive, sondern auch für andere Durchflussmessgeräte.

Einleitend ist nur gesagt, dass zu dem in Rede stehenden Durchflussmessgerät unter anderem eine Messleitung und ein Messgerätgehäuse gehören, und dann ist - in Bezug auf das Beispiel der magnetisch-induktiven Durchflussmessgeräte - auch gesagt, dass die bekannten magnetisch-induktiven Durchflussmessgeräte in der Regel für den "industriellen Einsatz" konzipiert sind, deshalb insgesamt "Stabile Konstruktionen" darstellen müssen. "Stabile Konstruktionen" bedeutet auch, dass sowohl die Messleitung als auch das Messgerätgehäuse "für sich" so ausgeführt sind, dass sie allen mechanischen und thermischen Belastungen "ohne Weiteres" standhalten können.

Ausgehend von dem, was zuvor erläutert worden ist, führt also die Lehre der Erfindung, der Messleitung und/oder dem Messgerätgehäuse eine Verstärkungsstruktur zuzuordnen, dazu, dass bei dem erfindungsgemäßen Durchflussmessgerät die Messleitung und/oder das Messgerätgehäuse "weniger stabil" ausgeführt sein können bzw. kann, dass ohne die erfindungsgemäß vorgesehene Verstärkungsstruktur möglichen mechanischen und/oder thermischen Belastungen nicht standgehalten werden könnte.

Was ist nun unter "Verstärkungsstruktur" und unter "zugeordnet ist" zu verstehen? Das wird im Folgenden in Verbindung mit im Einzelnen beschriebenen Ausführungsbeispielen erfindungsgemäßer Durchflussmessgeräte erläutert.

Erfindungsgemäß besteht die Verstärkungsstruktur aus mindestens einer und vorzugsweise aus mehreren Verstärkungseinheiten. Die Verstärkungseinheiten sind dabei in einer Ausgestaltung mindestens zwei separate Komponenten. In einer alternativen Ausgestaltung sind die Verstärkungseinheiten funktional betrachtete Elemente, die zusammenwirken oder einsteilig ausgeführt sein können.

In einer Ausgestaltung ist mindestens eine Verstärkungseinheit im Wesentlichen rohrförmig ausgestaltet und in einer weiteren Ausgestaltung sind alle Verstärkungseinheiten im Wesentlichen rohrförmig ausgestaltet.

Die rohrförmige Verstärkungseinheit - ergänzend gilt dies für alle rohrförmigen Verstärkungseinheiten - ist in einer ergänzenden Ausgestaltung als Zylinder - in einer Variante insbesondere als Vollzylinder - ausgestaltet, wobei wenigstens an einem Stirnende des Zylinders ein Gewinde - und insbesondere ein Außengewinde - angeformt ist. In einer Ausgestaltung sind an beiden Stirnenden Gewinde vorhanden.

In einer erfindungsgemäßen Ausgestaltung besteht mindestens eine Verstärkungseinheit aus zwei Verstärkungselementen. Davon ausgehend bestehen in einem weiteren nicht erfindungsgemäßen Beispiel alle Verstärkungseinheiten aus mehreren und insbesondere mindestens zwei Verstärkungselementen.

In einer sich daran anschließenden erfindungsgemäßen Ausgestaltung besteht die Verstärkungseinheit aus einem Verstärkungsrohr und aus einem das Verstärkungsrohr durchdringenden Verstärkungsbolzen.

In einer Ausgestaltung verfügt der Verstärkungsbolzen zumindest an einer Stirnseite über ein Gewinde. Erstreckt sich der Verstärkungsbolzen in einer Ausgestaltung vollständig durch das Verstärkungsrohr hindurch, ist also insbesondere das Verstärkungsrohr nicht wie in einer alternativen Ausgestaltung einseitig verschlossen, so verfügt der Verstärkungsbolzen in einer Ausführungsvariante an beiden Stirnseiten über ein Gewinde und vorzugsweise jeweils über ein Außengewinde.

Die Verstärkungsbolzen können über ihre gesamte Länge, vorzugsweise aber nur an einem Ende oder an beiden Enden jeweils mit einem Außengewinde versehen sein.

In einer erfindungsgemäßen Ausgestaltung ist mindestens eine Verstärkungseinheit - dies gilt in einer Ausgestaltung für alle Verstärkungseinheiten - bzw. ist mindestens ein Verstärkungsbolzen zumindest einseitig, vorzugsweise beidseitig mit einer auf den Verstärkungsbolzen aufschraubbaren Endkappe versehen.

Eine bevorzugte Ausführungsform des erfindungsgemäßen Durchflussmessgeräts ist dadurch gekennzeichnet, dass die Verstärkungsstruktur rahmenartig oder gitterförmig ausgeführt ist, also wie ein Rahmen oder ein Gitter die Messleitung und/oder das Messgerätgehäuse umfasst. Dabei, aber nicht nur dabei, kann die Verstärkungsstruktur einteilig, insbesondere einstückig, oder mehrteilig ausgeführt sein, bei der mehrteiligen Ausführung also aus mehreren Verstärkungseinheiten bestehen.

Weiter oben ist darauf hingewiesen worden, dass bei dem erfindungsgemäßen Durchflussmessgerät die Messleitung und/oder das Messgerätgehäuse "weniger stabil" ausgeführt sein können bzw. kann, also so ausgeführt sein können bzw. kann, dass ohne die erfindungsgemäß vorgesehene Verstärkungsstruktur mögliche mechanische und/oder thermische Belastungen nicht standgehalten werden könnten. Das führt dann unmittelbar zu einem wiederum bevorzugten nicht erfindungsgemäßen Beispiel des magnetisch-induktiven Durchflussmessgeräts, die dadurch gekennzeichnet ist, dass die Verstärkungsrohre und/oder die Verstärkungsbolzen aus einem hochbelastbaren Material bestehen, insbesondere aus Metall und/oder Keramik und/oder hochbelastbarem Kunststoff, z. B. PEEK. Somit besteht eine Ausgestaltung darin, dass die Messleitung und/oder das Messgerätgehäuse aus Kunststoff bestehen bzw. besteht und dass mindestens eine Verstärkungseinheit - vorzugsweise alle Verstärkungseinheiten - aus Metall und/oder aus Keramik und/oder aus hochbelastbarem Kunststoff besteht.

Bei den Durchflussmessgeräten, bei denen zur Verstärkungsstruktur Verstärkungsrohre und Verstärkungsbolzen gehören, ist die Beanspruchung der Verstärkungsrohre einerseits und der Verstärkungsbolzen andererseits unterschiedlich. Die Verstärkungsrohre werden nämlich auf Druck beansprucht, die Verstärkungsbolzen auf Zug. Folglich ist ein dies berücksichtigendes bevorzugtes nicht erfindungsgemäßes Beispiel des Durchflussmessgeräts ergänzend dadurch gekennzeichnet, dass die Verstärkungsrohre aus einem eine hohe Druckbeanspruchung standhaltendem Material und die Verstärkungsbolzen aus einem eine hohe Zugbeanspruchung standhaltenden Material bestehen.

Zur allgemeinen Lehre der Erfindung gehört, dass bei Durchflussgeräten der in Rede stehenden Art der Messleitung und/oder dem Messgerätgehäuse eine Verstärkungsstruktur zugeordnet ist. Dieses "Zugeordnet sein" kann unterschiedlich realisiert sein, insbesondere in zwei Ausführungsformen, die nachfolgend beschrieben werden.

Das zuvor Ausgeführte berücksichtigend, ist eine erste Ausführungsform dadurch gekennzeichnet, dass die Verstärkungsstruktur das Messgerätgehäuse durchdringend ausgeführt ist. Das bedeutet für eine Ausführungsform, bei der die Verstärkungsstruktur aus mehreren Verstärkungseinheiten besteht, dass die Verstärkungseinheiten zumindest teilweise in im Messgerätgehäuse vorhandenen Ausnehmungen angeordnet sind.

Die andere, konstruktiv und montagetechnisch bevorzugte Ausführungsform ist dagegen dadurch gekennzeichnet, dass die Verstärkungsstruktur das Messgerätgehäuse umfassend, also das Messgerätgehäuse mehr oder weniger einschließend, ausgeführt ist. Diese Ausführungsform ist weiter dadurch gekennzeichnet, dass die Verstärkungseinheiten zumindest in außen am Messgerätgehäuse vorgesehenen, vorzugsweise in Längsrichtung offenen Ausnehmungen angeordnet sind. Die Ausnehmungen werden dabei beispielweise teilweise durch eine Außenfläche des Messgerätegehäuses gebildet und sind in einer Ausgestaltung nur teilweise geschlossen, so dass die Ausnehmungen teilweise nach außen offen sind.

Die funktionale Wirkung der bei erfindungsgemäßen Durchflussmessgeräten vorgesehenen Verstärkungsstruktur ist bei einer wiederum bevorzugten Ausführungsform erfindungsgemäßer Durchflussmessgeräte dann noch verbessert, wenn dem Messgerätgehäuse zumindest einseitig, vorzugsweise beidseitig ein vorzugsweise plattenförmiges Abstützelement zugeordnet ist. Bei dieser Ausführungsform können die ergänzend vorgesehenen Abstützelemente durch die auf die Verstärkungsbolzen bzw. allgemein auf die Verstärkungseinheiten aufschraubbaren Endkappen und die Verstärkungsbolzen beidseitig gegen das Messgerätgehäuse gespannt werden.

Insbesondere bei der zuletzt beschriebenen Ausführungsform erfindungsgemäßer Durchflussmessgeräte ist es von ganz besonderem Vorteil, wenn die Länge der Verstärkungsrohre der wirksamen Länge der Messleitung entspricht. Weist die Messleitung zumindest einseitig, vorzugsweise beidseitig die Länge der Messleitung bestimmende O-Ringe auf, dann ist also die Länge der Verstärkungsrohre exakt so zu wählen, dass sie der Länge der Messleitung einschließlich der endseitig vorgesehenen O-Ringe entspricht.

Bei der zuletzt beschriebenen Ausführungsform führt also das beschriebene Spannen der vorzugsweise plattenförmigen Abstützelemente gegen das Messgerätgehäuse zu einem Spannen gegen die Verstärkungseinheiten bzw. in der mehrteiligen Ausgestaltung gegen die Verstärkungsrohre, führt also das Spannen der vorzugsweise plattenförmigen Abstützelemente weder zu einer Druckbeanspruchung der Messleitung noch zu einer Druckbeanspruchung des Messgerätgehäuses. Auf Druck - und korrespondierend auf Zug - werden nur die Verstärkungsrohre und die Verstärkungsbolzen bzw. allgemein die Verstärkungseinheiten beansprucht. Das ist der ganz wesentliche Vorteil bei den erfindungsgemäßen Durchflussmessgeräten, bei denen also, wie weiter oben bereits ausgeführt, sowohl die Messleitung als auch das Messgerätgehäuse aus einem relativ gering beanspruchbaren - und damit kostengünstigen - Material ausgeführt sein können, insbesondere aus relativ preisgünstigem Kunststoff.

Zuvor ist eine Ausführungsform erfindungsgemäßer Durchflussmessgeräte beschrieben, bei denen dem Messgerätgehäuse einseitig, vorzugsweise beidseitig ein vorzugsweise plattenförmiges Abstützelement zugeordnet ist. Denkbar sind jedoch auch Beispiele, bei denen ein solches Abstützelement nicht vorgesehen ist. Bei solchen nicht erfindungsgemäßen Beispielen können dann an den beidseitig an das Durchflussmessgerät anzuschließende Rohrleitungen Flansche aufweisen, die die Funktion der bei der zuvor beschriebenen Ausführungsform vorgesehenen, vorzugsweise plattenförmigen Abstützelemente übernehmen. Bei diesen nicht erfindungsgemäßen Beispielen, also bei den Beispielen, die kein vorzugsweise plattenförmiges Abstützelement aufweisen, können dann die Flansche der Rohrleitungen mit Hilfe der Verstärkungsbolzen und der darauf aufschraubbaren Endkappen gegen die Verstärkungsrohre gespannt werden. Auch bei diesem nicht erfindungsgemäßen Beispiel werden also die Messleitung und das Messgerätgehäuse nicht auf Druck beansprucht, selbstverständlich natürlich auch nicht auf Zug.

Bisher sind mögliche Ausführungsformen der zu erfindungsgemäßen Durchflussmessgeräten gehörenden Messgerätgehäuse nicht angesprochen worden. Jedoch gibt es auch insoweit im Rahmen der Erfindung bevorzugte Ausführungsformen. Insbesondere ist eine bevorzugte Ausführungsform dadurch gekennzeichnet, dass das Messgerätgehäuse zwei Aufnahmeräume aufweist, einen ersten Aufnahmeraum, in dem sich die Messleitung befindet, und einen zweiten Aufnahmeraum, in dem sich eine Auswerteeinheit befindet. Dabei kann dann die zu magnetisch-induktiven Durchflussmessgeräten gehörende Magnetfelderzeugungseinrichtung in dem Aufnahmeraum vorgesehen sein, in dem sich die Messleitung befindet, in dem Aufnahmeraum vorgesehen sein, in dem sich die Auswerteeinheit befindet, oder teilweise in dem Aufnahmeraum vorgesehen sein, in dem sich die Messleitung befindet, und teilweise in dem Aufnahmeraum vorgesehen sein, in dem sich die Auswerteeinheit befindet.

Bei der zuvor beschriebenen Ausführungsform erfindungsgemäßer Durchflussmessgeräte, bei denen also das Messgerätgehäuse zwei Aufnahmeräume aufweist, sind die Verstärkungsrohre bzw. Verstärkungseinheiten vorzugsweise beidseitig im Bereich des ersten Aufnahmeraumes des Messgerätgehäuses vorgesehen. Gehören beispielsweise zu der Verstärkungsstruktur vier Verstärkungsrohre, so sind die dann gleichsam "an allen vier Ecken" des ersten Aufnahmeraumes vorgesehen. Das macht deshalb besonders Sinn, weil, wie ausgeführt, sich in dem ersten Aufnahmeraum die Messleitung befindet und folglich die Stabilität des ersten Aufnahmeraumes wichtiger ist als die Stabilität des zweiten Aufnahmeraumes. In dieser Ausgestaltung wird somit insbesondere die Messleitung, die da Medium führt, verstärkt.

Bei den erfindungsgemäßen Durchflussmessgeräten, bei denen das Messgerätgehäuse zwei Aufnahmeräume aufweist, können die beiden Aufnahmeräume dadurch realisiert sein, dass das Messgerätgehäuse aus zwei miteinander verbundenen Teilgehäusen besteht. Bevorzugt ist jedoch eine Ausführungsform, bei der das Messgerätgehäuse nicht insoweit aus zwei Teilgehäusen besteht, als ein Teilgehäuse den ersten Aufnahmeraum und ein zweites Teilgehäuse den zweiten Aufnahmeraum darstellen. Vielmehr empfiehlt es sich, die beiden Aufnahmeräume in dem insoweit ungeteilten Messgerätgehäuse zu verwirklichen, also durch eine innere Trennung, die natürlich keine durchgehende Trennwand sein darf, weil jedenfalls von der im ersten Aufnahmeraum vorgesehenen Messleitung zu der im zweiten Aufnahmeraum vorgesehenen Auswerteeinheit elektrische Verbindungen geführt sein müssen. Denkbar ist im Übrigen ja auch, wie weiter oben bereits beschrieben, dass bei erfindungsgemäßen Durchflussmessgeräten in der Form von magnetisch-induktiven Durchflussmessgeräten die Magnetfelderzeugungseinrichtung sich teilweise im ersten Aufnahmeraum und teilweise im zweiten Aufnahmeraum befindet. Folglich darf eine Trennung der beiden Aufnahmeräume die Realisierung der Magnetfelderzeugungseinrichtung teilweise im ersten Aufnahmeraum und teilweise im zweiten Aufnahmeraum nicht verhindern.

Wie zuvor im Einzelnen dargelegt, gibt es verschiedene Möglichkeiten, das erfindungsgemäße Durchflussmessgerät auszugestalten und weiterzubilden. Dazu wird verwiesen auf die dem Patentanspruch 1 nachgeordneten Patentansprüche und auf die nachfolgende Beschreibung in Verbindung mit der Zeichnung. In der Zeichnung zeigen
- Fig. 1: eine Teilansicht, perspektivisch dargestellt, eines Beispiels eines erfindungsgemäßen Durchflussmessgeräts,
- Fig. 2: wiederum eine Teilansicht und wiederum perspektivisch dargestellt, ein Beispiel eines nicht erfindungsgemäßen Durchflussmessgeräts,
- Fig. 3: ein weiteres Mal eine Teilansicht und ein weiteres Mal perspektivisch dargestellt, ein Ausführungsbeispiel eines erfindungsgemäßen Durchflussmessgeräts,
- Fig. 4: ein Beispiel eines nicht erfindungsgemäßen Durchflussmessgeräts,
- Fig. 5: eine Teilansicht, erneut perspektivisch dargestellt, eines Beispiels eines nicht erfindungsgemäßen Durchflussmessgeräts, und
- Fig. 6: einen Schnitt durch eine Verstärkungseinheit als Teil einer Verstärkungsstruktur.

Dargestellt ist als Beispiel für ein erfindungsgemäßes Durchflussmessgerät ein magnetisch-induktives Durchflussmessgerät. Dabei besteht bei dem erfindungsgemäßen Durchflussmessgerät jedoch keine Beschränkung auf das Messprinzip.

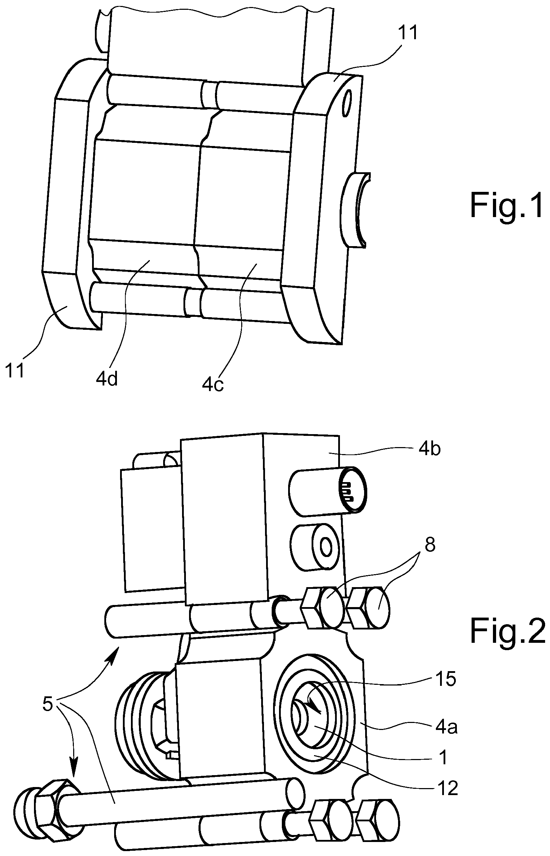

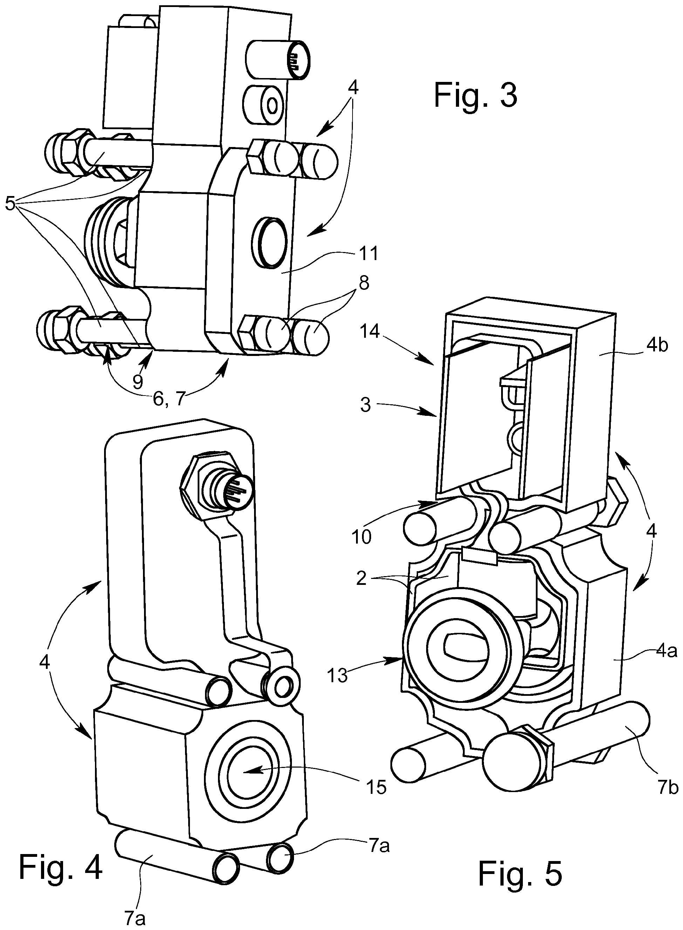

Wie einleitend ausgeführt, gehören zu den in Rede stehenden magnetisch-induktiven Durchflussmessgeräten und auch zu den erfindungsgemäßen magnetisch-induktiven Durchflussmessgeräten, was in den Figuren teilweise nicht dargestellt ist, eine Messleitung 1, durch die das Medium strömt, dessen Durchfluss mit Hilfe eines erfindungsgemäßen magnetisch-induktiven Durchflussmessgeräts gemessen werden soll, eine Magnetfelderzeugungseinrichtung 2 zur Erzeugung eines die Messleitung 1 wenigstens teilweise durchsetzenden Magnetfeldes, zwei in Bezug auf ihre Position in Fig. 2 und Fig. 4 angedeutete Messelektroden 15 zum Abgreifen einer in dem strömenden Medium induzierten Messspannung, eine Auswerteeinheit 3 und ein die Messleitung 1, die Magnetfelderzeugungseinrichtung 2 und die Auswerteeinheit 3 aufnehmendes Messgerätgehäuse 4.

Erfindungsgemäß ist der Messleitung 1 und/oder dem Messgerätgehäuse 4 eine Verstärkungsstruktur 5 zugeordnet; in den in den Figuren dargestellten Ausführungsformen erfindungsgemäßer magnetisch-induktiver Durchflussmessgeräte ist die Verstärkungsstruktur 5 sowohl der Messleitung 1 als auch dem Messgerätgehäuse 4 zugeordnet. Diese Verstärkungsstruktur 5 kann, was für die dargestellten Ausführungsbeispiele nicht gilt, rahmenartig oder gitterförmig ausgeführt sein, also wie ein Rahmen oder ein Gitter die Messleitung und/oder das Messgerätgehäuse umfassen.

Für die in den Figuren - nur teilweise - dargestellten Ausführungsbeispiele erfindungsgemäßer magnetisch-induktiver Durchflussmessgeräte gilt nun, dass die Verstärkungsstrukturen 5 jeweils mehrteilig ausgeführt sind, also aus mehreren Verstärkungseinheiten 6 bestehen. Dabei bestehen die einzelnen Verstärkungseinheiten 6 jeweils aus zwei Verstärkungselementen 7, nämlich jeweils aus einem Verstärkungsrohr 7a und einem Verstärkungsbolzen 7b. Wie - indirekt - den Fig. 2, 3 und 4 entnommen werden kann, sind die Verstärkungsbolzen 7b zumindest einseitig, vorzugsweise beidseitig mit auf die Verstärkungsbolzen aufschraubbaren Endkappen 8 versehen. Dazu weisen also die Verstärkungsbolzen 7b nicht dargestellte, aber ohne Weiteres vorstellbare Außengewinde auf. Hier ist auch zu erkennen, dass die Verstärkungsbolzen 7b eine größere Länge als die Verstärkungsrohre 7a aufweisen.

Dass und warum die Verstärkungsrohre 7a und die Verstärkungsbolzen 7b aus einem hochbelastbaren Material bestehen, insbesondere aus Metall und/oder Keramik und/oder aus hochbelastbarem Kunststoff, ist weiter oben bereits ausgeführt. Das gilt natürlich auch für die bei den dargestellten Ausführungsbeispielen verwendeten Verstärkungsrohren 7a und Verstärkungsbolzen 7b. Im Einzelnen bestehen die Verstärkungsrohre 7a aus einem eine relativ hohe Druckbeanspruchung standhaltenden Material und die Verstärkungsbolzen 7b aus einem eine relativ hohe Zugbeanspruchung standhaltenden Material.

Weiter oben ist ausgeführt, wie das "Zugeordnet sein" realisiert sein kann.

In dem in Fig. 3 dargestellten Ausführungsbeispiel eines erfindungsgemäßen magnetisch-induktiven Durchflussmessgeräts ist die Verstärkungsstruktur 5 das Messgerätgehäuse 4 durchdringend ausgeführt. Die Verstärkungsrohre 7a sind in im Messgerätgehäuse 4 vorgesehenen Ausnehmungen 9 angeordnet. Im Gegensatz zum Ausführungsbeispiel nach Fig. 3 ist bei den Ausführungsbeispielen nach den Fig. 1, 2, 4 und 5 die Verstärkungsstruktur 5 das Messgerätgehäuse 4 umfassend ausgeführt. Bei diesem Ausführungsbeispiel sind nämlich die Verstärkungsrohre 7a in außen am Messgerätgehäuse 4 vorgesehenen, in Längsrichtung offenen Ausnehmungen 10 angeordnet oder ggf. teilweise direkt an der Außenwandung des Messgerätegehäuses 4 passend fixiert. Dieses Ausführungsbeispiel ist in konstruktiver und in montagetechnischer Hinsicht dem zuvor beschriebenen Ausführungsbeispiel gegenüber vorzuziehen.

Wie die Fig. 1 und 3 zeigen, kann dem Messgerätgehäuse 4 zumindest einseitig, vorzugsweise beidseitig ein vorzugsweise plattenförmig ausgeführtes Abstützelement 11 zugeordnet sein. Bei diesem erfindungsgemäßen Ausführungsbeispiel können die ergänzend vorgesehenen Abstützelemente 11 durch die auf die Verbindungsbolzen 7a aufschraubbaren Endkappen 8 und die Verbindungsbolzen 7b beidseitig gegen das Messgerätgehäuse 4 gespannt werden, - richtig: in Richtung auf das Messgerätgehäuse 4 gespannt werden.

Ausführungsbeispiele erfindungsgemäßer magnetisch-induktiver Durchflussmessgeräte weisen dann ganz besondere Vorteile auf, wenn die Länge der Verstärkungsrohre 7a der wirksamen Länge der Messleitung 1 entspricht. Weist dann, wie dies in der Fig. 2 zu erkennen ist, die Messleitung 1 zumindest einseitig, vorzugsweise beidseitig einen bzw. jeweils einen die Länge der Messleitung 1 bestimmenden, richtig: mitbestimmenden O-Ring 12 auf, dann geht eine besonders wichtige Lehre der Erfindung dahin, die Länge der Verstärkungsrohre 7a exakt so zu wählen, dass sie der Länge der Messleitung 1 einschließlich der endseitig vorgesehenen O-Ringe 12 entspricht.

Bei dem zuletzt beschriebenen erfindungsgemässen Ausführungsbeispiel führt das zuvor im Einzelnen beschriebene Spannen der Abstützelemente 11 gegen das Messgerätgehäuse 4, richtig: das Spannen der Abstützelemente 11 gegen die Verstärkungsrohre 7a, nur zu einem Spannen gegen die Verstärkungsrohre 7a. Bei der exakten Einhaltung der zuvor als wesentlich beschriebenen Dimensionierung der Verstärkungsrohre 7a in Bezug auf die Länge der Messleitung 1 führt das Spannen der Abstützelemente 11 dann, wenn das Messgerätgehäuse 4 nicht über die Enden der Messleitung 1 vorsteht, weder zu einer Druckbeanspruchung der Messleitung 1 noch zu einer Druckbeanspruchung des Messgerätgehäuses 4. Beansprucht werden vielmehr nur einerseits auf Druck die Verstärkungsrohre 7a, andererseits auf Zug die Verstärkungsbolzen 7b. Das ist der bereits weiter oben beschriebene wesentliche Vorteil der im Einzelnen beschriebenen erfindungsgemäßen magnetisch-induktiven Durchflussmessgeräte. Es können also sowohl die Messleitung 1 als auch das Messgerätgehäuse 4 aus einem relativ gering beanspruchbaren - und damit kostengünstigen - Material ausgeführt sein, insbesondere aus relativ preisgünstigem Kunststoff.

Während die Fig. 1 und 3 Ausführungsbeispiele erfindungsgemäßer magnetisch-induktiver Durchflussmessgeräte zeigen, bei denen dem Messgerätgehäuse 4 zumindest einseitig, vorzugsweise beidseitig ein plattenförmiges Abstützelement 11 zugeordnet ist, sind auch nicht erfindungsgemäße Beispiele denkbar, bei denen ein solches Abstützelement nicht vorgesehen ist. Es handelt sich dann, wie die Fig. 2, 4 und 5 zeigen, um nicht erfindungsgemäße Beispiele, bei denen an das magnetisch-induktive Durchflussmessgerät anzuschließende Rohrleitungen Flansche aufweisen, die die Funktion der zuvor beschriebenen Abstützelemente 11 übernehmen. Bei diesen nicht erfindungsgemäßen Beispielen können dann die Flansche der Rohrleitungen mit Hilfe der Verstärkungsbolzen 7b und der darauf aufschraubbaren Endkappen 8 gegen die Verstärkungsrohre 7a gespannt werden. Auch bei solchen nicht erfindungsgemäßen Beispielen werden weder die Messleitung 1 noch das Messgerätgehäuse 4 auf Druck beansprucht, selbstverständlich auch nicht auf Zug.

Erfindungsgemäß kann es auch um die Realisierung der zu den erfindungsgemäßen magnetisch-induktiven Durchflussmessgeräten gehörenden Messgerätgehäuse 4 gehen. Insoweit ist ein bevorzugtes Ausführungsbeispiel zunächst dadurch gekennzeichnet, dass das Messgerätgehäuse 4 zwei Aufnahmeräume 13, 14 aufweist, einen ersten Aufnahmeraum 13, in dem sich die Messleitung 1 befindet, und einen zweiten Aufnahmeraum 14, in dem sich die Auswerteeinheit 3 befindet. Die zu erfindungsgemäßen magnetisch-induktiven Durchflussmessgeräten gehörende Magnetfelderzeugungseinrichtung 2 kann dann in dem Aufnahmeraum 13 vorgesehen sein, in dem sich die Messleitung 1 befindet, in dem Aufnahmeraum 14 vorgesehen sein, in dem sich die Auswerteeinheit 3 befindet, oder teilweise in dem Aufnahmeraum 13 vorgesehen sein, in dem sich die Messleitung 1 befindet, und teilweise in dem Aufnahmeraum 14 vorgesehen sein, in dem sich die Auswerteeinheit 3 befindet.

Bei dem zuletzt beschriebenen Ausführungsbeispiel von erfindungsgemäßen magnetisch-induktiven Durchflussmessgeräten können die beiden Aufnahmeräume 13, 14 des Messgerätgehäuses 4 aus zwei separaten, dann jedoch miteinander verbundenen Teilgehäusen 4a, 4b bestehen, wie dies der Fall ist bei den Ausführungsbeispielen, die in den Fig. 2 und 5 dargestellt sind. Bevorzugt ist jedoch ein Ausführungsbeispiel, bei der das Messgerätgehäuse 4 nicht aus zwei Teilgehäusen 4a, 4b besteht. Empfehlenswert ist vielmehr ein Ausführungsbeispiel, bei dem die beiden Aufnahmeräume 13, 14 durch eine Trennung im Inneren des Messgerätgehäuses 4 realisiert ist. Dabei kann es sich natürlich nicht um eine vollständig durchgehende Trennwand handeln, weil jedenfalls von der Messleitung 1 im ersten Aufnahmeraum 13 zur Auswerteeinheit 3 im zweiten Aufnahmeraum 14 elektrische Verbindungen geführt sein müssen.

Weist bei erfindungsgemäßen magnetisch-induktiven Durchflussmessgeräten, wie zuvor erläutert, das Messgerätgehäuse 4 zwei Aufnahmeräume 13, 14 auf, dann empfiehlt es sich, die Verstärkungsrohre 7a beidseitig des ersten Aufnahmeraumes 13 des Messgerätgehäuses 4 vorzusehen.

Schließlich sei noch darauf hingewiesen, dass bei den erfindungsgemäßen magnetisch-induktiven Durchflussmessgräten das Messgerätgehäuse 4 in einer zur Messleitung 1 senkrechten Ebene geteilt sein kann, also insoweit aus zwei Messgerätgehäusehälften 4c, 4d besteht (siehe Fig. 1).

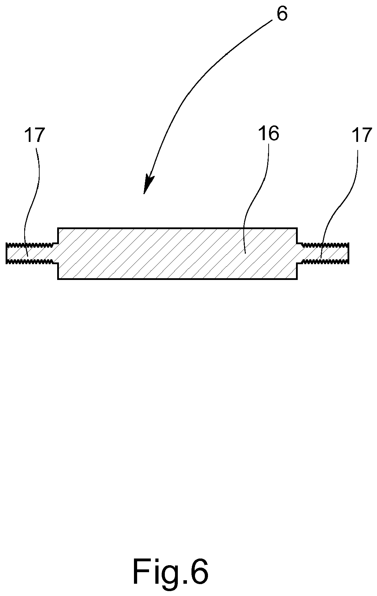

Eine besondere Ausgestaltung einer Verstärkungseinheit 6 zeigt die Fig. 6. Die Verstärkungseinheit 6 ist dabei als Zylinder 16 und sogar als Vollzylinder ausgestaltet, an dessen zwei Stirnseiten jeweils ein Außengewinde 17 angeformt ist.

## Patentansprüche

1. Durchflussmessgerät zur Durchflussmessung eines strömenden Mediums, mit einer Messleitung (1) und mit einem Messgerätgehäuse (4),
dass der Messleitung (1) und/oder dem Messgerätgehäuse (4) eine Verstärkungsstruktur (5) zugeordnet ist und dass die Verstärkungsstruktur (5) aus mindestens einer Verstärkungseinheit (6) - vorzugsweise mehreren Verstärkungseinheiten (6) - besteht, wobei mindestens eine Verstärkungseinheit (6) zumindest einseitig mit einer auf die Verstärkungseinheit (6) aufschraubbaren Endkappe (8) versehen ist, und wobei dem Messgerätgehäuse (4) zumindest einseitig ein vorzugsweise plattenförmiges Abstützelement (11) zugeordnet ist, **dadurch gekennzeichnet,**
**dass** mindestens eine Verstärkungseinheit (6) aus zwei Verstärkungselementen (7) besteht, wobei die Verstärkungseinheit (6) aus einem Verstärkungsrohr (7a) und aus einem das Verstärkungsrohr (7a) durchdringenden Verstärkungsbolzen (7b) besteht, wobei die Länge des Verstärkungsrohrs (7a) der wirksamen Länge der Messleitung (1) entspricht, so dass das Spannen des plattenförmigen Abstützelements in Richtung auf das Messgerätegehäuse (4) zu einem Spannen gegen das Verstärkungsrohr führt.

2. Durchflussmessgerät nach Anspruch 1, **dadurch gekennzeichnet, dass** mindestens eine Verstärkungseinheit (6) rohrförmig ausgestaltet ist.

3. Durchflussmessgerät nach Anspruch 2, **dadurch gekennzeichnet, dass** die rohrförmig ausgestaltete Verstärkungseinheit (6) als Zylinder (16) mit mindestens einem stirnseitig angeformten Gewinde (17) ausgestaltet ist.

4. Durchflussmessgerät nach einem der Ansprüche 1 bis 3, **dadurch gekennzeichnet, dass** die Verstärkungsstruktur (5) das Messgerätgehäuse (4) durchdringend ausgeführt ist und dass die Verstärkungseinheiten (6) zumindest teilweise in im Messgerätgehäuse (4) vorhandenen Ausnehmungen (9) angeordnet sind.

5. Durchflussmessgerät nach einem der Ansprüche 1 bis 3, **dadurch gekennzeichnet, dass** die Verstärkungsstruktur (5) das Messgerätgehäuse (4) umfassend ausgeführt ist und dass die Verstärkungseinheiten (6) zumindest teilweise in außen am Messgerätgehäuse (4) vorhandenen Ausnehmungen (10) angeordnet sind.

6. Durchflussmessgerät nach einem der Ansprüche 1 bis 5, **dadurch gekennzeichnet, dass** eine Auswerteeinheit (3) vorhanden ist, dass das Messgerätgehäuse (4) einen ersten Aufnahmeraum (13), in dem sich die Messleitung (1) befindet, und einen zweiten Aufnahmeraum (14), in dem sich die Auswerteeinheit (3) befindet, aufweist und dass die Verstärkungseinheiten (6) im Bereich des ersten Aufnahmeraums (13) des Messgerätgehäuses (4) angeordnet sind.

7. Durchflussmessgerät nach einem der Ansprüche 1 bis 6, **dadurch gekennzeichnet, dass** es sich um ein magnetisch-induktives Durchflussmessgerät zur Durchflussmessung handelt, wobei eine Magnetfelderzeugungseinrichtung (2) zur Erzeugung eines die Messleitung (1) wenigstens teilweise durchsetzenden Magnetfeldes, mindestens eine Messelektrode (15) zum Abgreifen einer in dem strömenden Medium induzierten Messspannung und eine Auswerteeinheit (3) vorhanden sind.

## Claims

1. Flowmeter for flow measurement of a flowing medium having a measuring tube (1) and a measuring device housing (4),
that a reinforcement structure (5) is assigned to the measuring tube (1) and/or the measuring device housing (4), and that the reinforcement structure (5) consists of at least one reinforcement unit (6) - preferably of several reinforcement units (6), wherein at least one reinforcement structure (5) is provided, at least on one side, with an end cap (8) that can be screwed onto the reinforcement unit (6), and wherein the measuring device housing (4) is assigned a preferably plate-like supporting element (11) at least on one side
**characterized in**
**that** at least one reinforcement unit (6) consists of two reinforcement elements (7), wherein the reinforcement unit (6) consists of one reinforcement pipe (7a) and of one reinforcement bolt (7b) penetrating the reinforcement pipe (7a), wherein the length of the reinforcement pipe (7a) corresponds to the effective length of the measuring tube (1), so that the pressing of the preferably plate-like supporting elements against the measuring device housing (4) leads to a pressing against the reinforcement pipe.

2. Flowmeter according to claim 1, **characterized in that** at least one reinforcement unit (6) is tube-shaped.

3. Flowmeter according to claim 2, **characterized in that** the tube-shaped reinforcement unit (6) is designed as a cylinder (16) with at least one thread (17) formed on an end face.

4. Flowmeter according to any one of claims 1 to 3, **characterized in that** the reinforcement structure (5) is designed to penetrate the measuring device housing (4), and that the reinforcement units (6) are arranged at least in part in recesses (9) present in the measuring device housing (4).

5. Flowmeter according to any one of claims 1 to 3, **characterized in that** the reinforcement structure (5) is designed to surround the measuring device housing (4), and that the reinforcement units (6) are arranged at least in part in recesses (10) present on the outside of the measuring device housing (4).

6. Flowmeter according to any one of claims 1 to 5, **characterized in that** an evaluation unit (3) is present, that the measuring device housing (4) has a first incorporating space (13), in which the measuring tube (1) is located and a second incorporating space (14), in which the evaluation unit is located, and that the reinforcement units (6) are arranged in the area of the first incorporating space (13) of the measuring device housing (4).

7. Flowmeter according to any one of claims 1 to 6, **characterized in that** the flowmeter is a magnetic-inductive flowmeter, wherein a magnetic field generator (2) for generating a magnetic field at least partially interfusing the measuring tube (1), at least one measuring electrode (15) for tapping a measuring voltage induced in the flowing medium, and an evaluation unit (3) are present.

## Revendications

1. Débitmètre pour la mesure de débit d'un fluide s'écoulant, comprenant une conduite de mesure (1) et un boîtier de débitmètre (4), une structure de renforcement (5) étant associée à la conduite de mesure (1) et/ou au boîtier de débitmètre (4), et la structure de renforcement (5) se composant d'au moins une unité de renforcement (6), de préférence de plusieurs unités de renforcement (6), au moins une unité de renforcement (6) étant pourvue au moins d'un côté d'un embout (8) pouvant être vissé sur l'unité de renforcement (6), et un élément de support (11) de préférence en forme de plaque étant associé au moins d'un côté au boîtier de débitmètre (4),
**caractérisé en ce**
**qu'**au moins une unité de renforcement (6) se compose de deux éléments de renforcement (7), l'unité de renforcement (6) se composant d'un tube de renforcement (7a) et d'un boulon de renforcement (7b) traversant le tube de renforcement (7a), la longueur du tube de renforcement (7a) correspondant à la longueur efficace de la conduite de mesure (1) de telle sorte que le serrage de l'élément de support en forme de plaque dans la direction du boîtier de débitmètre (4) entraîne un serrage contre le tube de renforcement.

2. Débitmètre selon la revendication 1, **caractérisé en ce qu'**au moins une unité de renforcement (6) est configurée sous forme tubulaire.

3. Débitmètre selon la revendication 2, **caractérisé en ce que** l'unité de renforcement (6) configurée sous forme tubulaire est configurée sous forme de cylindre (16) avec au moins un filetage (17) formé du côté frontal.

4. Débitmètre selon l'une quelconque des revendications 1 à 3, **caractérisé en ce que** la structure de renforcement (5) est réalisée de manière à traverser le boîtier de débitmètre (4) et **en ce que** les unités de renforcement (6) sont disposées au moins en partie dans des évidements (9) prévus dans le boîtier de débitmètre (4).

5. Débitmètre selon l'une quelconque des revendications 1 à 3, **caractérisé en ce que** la structure de renforcement (5) est réalisée de manière à comprendre le boîtier de débitmètre (4) et **en ce que** les unités de renforcement (6) sont disposées au moins en partie dans des évidements (10) prévus à l'extérieur au niveau du boîtier de débitmètre (4).

6. Débitmètre selon l'une quelconque des revendications 1 à 5, **caractérisé en ce qu'**une unité d'analyse (3) est prévue, **en ce que** le débitmètre (4) présente un premier espace de réception (13) dans lequel se trouve la conduite de mesure (1) et un deuxième espace de réception (14) dans lequel se trouve l'unité d'analyse (3) et **en ce que** les unités de renforcement (6) sont disposées dans la région du premier espace de réception (13) du boîtier de débitmètre (4).

7. Débitmètre selon l'une quelconque des revendications 1 à 6, **caractérisé en ce qu'**il s'agit d'un débitmètre magnétique-inductif pour la mesure de débit, un dispositif de génération de champ magnétique (2) pour générer un champ magnétique traversant au moins en partie la conduite de mesure (1), au moins une électrode de mesure (15) pour prélever une tension de mesure induite dans le fluide s'écoulant et une unité d'analyse (3) étant prévus.
